(19) Europäisches Patentamt
European Patent Office
Office européen des brevets

(11) **EP 4 075 318 A1**

(12) **EUROPÄISCHE PATENTANMELDUNG**

(43) Veröffentlichungstag:
**19.10.2022 Patentblatt 2022/42**

(21) Anmeldenummer: **22160215.4**

(22) Anmeldetag: **04.03.2022**

(51) Internationale Patentklassifikation (IPC):
**G06F 30/20** (2020.01)    **G06F 30/367** (2020.01)
**H02P 6/34** (2016.01)    G06F 111/10 (2020.01)
**G06F 119/06** (2020.01)

(52) Gemeinsame Patentklassifikation (CPC):
**G06F 30/20; G06F 30/367; H02P 6/34;**
G06F 2111/10; G06F 2119/06

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **12.04.2021   DE 102021203555**

(71) Anmelder: **Robert Bosch GmbH
70442 Stuttgart (DE)**

(72) Erfinder: **Vandamme, Antoine
70839 Gerlingen (DE)**

(54) **COMPUTER-IMPLEMENTIERTES VERFAHREN UND VORRICHTUNG ZUM MODELLIEREN BZW. SIMULIEREN UND ENTWERFEN EINES MOTORSYSTEMS MIT EINER ELEKTRONISCH KOMMUTIERTEN ELEKTRISCHEN MASCHINE**

(57) Die Erfindung betrifft ein computer-implementiertes Verfahren zum Modellieren bzw. Simulieren eines Motorsystems mit einer Leistungstreiberschaltung (2) mit mehreren Brückeninvertern (21) und einer mehrphasigen elektronisch kommutierten elektrischen Maschine (3), wobei zur Berechnung von Phasenströmen ($I_a$, $I_b$, $I_c$) und Phasenpotenzialen ($V_a$, $V_b$, $V_c$) in jedem Zeitschritt folgende Schritte ausgeführt werden:
- Durchführen einer Schaltungssimulation für die Leistungstreiberschaltung (2) unter Vorgabe eines Kommutierungsschemas unter Berücksichtigung einer Sperrspannung von Freilaufdioden (24), die antiparallel mit Halbleiterschaltern (22) gekoppelt sind, um ein jeweiliges Phasenpotenzial für mindestens einen inaktiv geschalteten Brückeninverter (21) abhängig von einem Zustand der Freilaufdioden (24) mindestens eines inaktiv geschalteten Brückeninverters (21) zu bestimmen;
- Bestimmen mindestens eines Phasenpotenzials ($V_a$, $V_b$, $V_c$) von mindestens einem aktiv geschalteten Brückeninverter (21) entsprechend der Ansteuerung mit dem Kommutierungsschema;
- Ermitteln von Phasenströmen ($I_a$, $I_b$, $I_c$) basierend auf einem Maschinenmodell der elektronisch kommutierten elektrischen Maschine abhängig von den Phasenpotenzialen ($V_a$, $V_b$, $V_c$).

Fig. 1

**Beschreibung**

Technisches Gebiet

Die Erfindung betrifft das Design und die Modellierung von Motorsystemen mit einer elektronisch kommutierten elektrischen Maschine, insbesondere einer permanentmagneterregten Synchronmaschine in Sternschaltung in abc Koordinaten.

Technischer Hintergrund

Bei der modellbasierten Entwicklung von Motorsystemen mit dreiphasigen elektronisch kommutierten elektrischen Maschinen wird üblicherweise ein lineares dreiphasiges Simulationsmodell der elektrischen Maschine mit einem Modell des Leistungstreibers verwendet. Der Leistungstreiber ist in der Regel zum Ansteuern von dreiphasigen elektrischen Maschinen als B6-Brückenmodell ausgebildet. Bei der Modellierung werden dazu wechselweise mithilfe des B6-Brückenmodells Werte für die Phasenpotenziale der Phasenanschlüsse der elektrischen Maschine berechnet und umgekehrt mithilfe des Modells für die elektrische Maschine die Phasenströme berechnet, die für die B6-Brückenschaltung relevant sind. Jedoch ist es schwierig, das Verhalten der Freilaufdiode in der B6-Brückenschaltung in geeigneter Weise zu modellieren.

Dies führt dazu, dass der Prozess zur Entwicklung und zum Entwurf eines derartigen Motorsystems häufig viele Iterationen benötigt.

Offenbarung der Erfindung

Erfindungsgemäß sind ein Verfahren zum Modellieren und Entwurf eines Motorsystems mit einem Leistungstreiber und einer elektronisch kommutierten elektrischen Maschine gemäß Anspruch 1 vorgesehen.

Weitere Ausgestaltungen sind in den abhängigen Ansprüchen angegeben.

Gemäß einem ersten Aspekt ist ein computer-implementiertes Verfahren zum Modellieren eines Motorsystems mit einer Leistungstreiberschaltung mit mehreren Brückeninvertern und einer mehrphasigen elektronisch kommutierten elektrischen Maschine vorgesehen, wobei zur Berechnung von Phasenströmen und Phasenpotenzialen in jedem Zeitschritt folgende Schritte ausgeführt werden:

- Ansteuern der elektronisch kumulierten elektrischen Maschine mithilfe der Leistungstreiberschaltung basierend auf einem Kommutierungsschema, das zumindest zeitweise ein Inaktivschalten eines oder mehrerer den einzelnen Phasen zugeordneten Brückeninverter vorsieht,
- Durchführen einer Schaltungssimulation für die Leistungstreiberschaltung unter Berücksichtigung einer Sperrspannung von Freilaufdioden, die antiparallel mit Halbleiterschaltern gekoppelt sind, um ein Phasenpotenzial für mindestens einen inaktiv geschalteten Brückeninverter abhängig von einem Zustand der Freilaufdioden des mindestens einen inaktiv geschalteten Brückeninverters;
- Bestimmen mindestens eines Phasenpotenzials von mindestens einem aktiv geschalteten Brückeninverter entsprechend der Ansteuerung mit dem Kommutierungsschema;
- Ermitteln von Phasenströmen basierend auf einem Maschinenmodell der elektronisch kommutierten elektrischen Maschine abhängig von den Phasenpotenzialen.

Bisher werden für den Entwurf von Motorsystemen mit einer Leistungstreiberschaltung und einer elektronisch kommutierten elektrischen Maschine signalflussorientierte Simulationswerkzeuge, wie beispielsweise Simulink, verwendet. Hierbei werden die Verhalten von physikalischen Blöcken, wie beispielsweise Dioden, Transistoren oder Widerstände, nicht separat berücksichtigt. Eine solche Simulation ist dadurch aufwendig, da eine effiziente Implementierung von allen möglichen Schaltzuständen in der Leistungstreiberschaltung aufgrund der hohen Anzahl von möglichen Zustandskombinationen aufwendig ist, vor allem wenn ein Brückeninverter der Leistungstreiberschaltung inaktiv ist und lediglich Freilaufdioden wirken. Die Berechnung eines resultierenden Phasenpotenzials eines solchen deaktivierten Brückeninverters ist a *priori* unbekannt, da dessen Wert vom a *priori* unbekannten Leitzustand beider Freilaufdioden der Halbleiterschalter abhängt.

Das obige Verfahren sieht eine Modellierung des Motorsystems mithilfe eines signalflussorientierten Simulationswerkzeugs vor, wobei das Modell der Leistungstreiberschaltung und das Maschinenmodell der elektrischen Maschine ohne einen iterativen Prozess genutzt werden können, um Phasenpotenziale und Phasenströme zu ermitteln. Dies ist möglich durch die effiziente Implementierung der möglichen Schaltzustände, wenn beide Halbleiterschalter eines Brückeninverters der Leistungstreiberschaltung ausgeschaltet bzw. sperrend sind. Durch die Modellierung der dem Halbleiterschalter zugeordneten oder intrinsisch vorgesehenen Freilaufdiode kann die Leistungstreiberschaltung in einfacherer Weise modelliert werden, was bei dem Modellentwurf, der Modellwartung bzw. bei der Modellerweiterung zu einer Zeit- und Aufwandsersparnis führen kann.

Weiterhin kann zum Bestimmen des Phasenpotenzials des mindestens einen inaktiv geschalteten Brückeninverters ein resultierendes Phasenpotenzial ermittelt werden, das entsprechend dem Zustand der Freilaufdioden auf ein sich von Sperrspannungen der Freilaufdioden ergebendes Potenzial begrenzt wird.

Es kann vorgesehen sein, dass bei mehreren inaktiv geschalteten Brückeninvertern die entsprechende Sperrspannung eines der mehreren inaktiv geschalteten Brückeninverter durch eine Stromleitung durch eine der Freilaufdioden eines weiteren der mehreren inaktiv geschalteten Brückeninverter bestimmt wird.

Das Maschinenmodell kann ein Sternpunktpotenzial berücksichtigen, wobei entsprechend der Zustände mögliche Phasenpotenziale für den mindestens einen inaktiv geschalteten Brückeninverter ermittelt werden und aus den möglichen Phasenpotenzialen die möglichen resultierenden Zustände bestimmt werden, wobei mithilfe einer Plausibilitätsprüfung der aktuelle Zustand und das zugehörige Phasenpotenzial des mindestens einen inaktiv geschalteten Brückeninverters aus den möglichen Phasenpotenzialen und den möglichen resultierenden Zuständen ausgewählt wird.

Gemäß einer Ausführungsform können bei der Auslegung des Motorsystems mit der Leistungstreiberschaltung und der mehrphasigen elektronisch kommutierten elektrischen Maschine für vorgegebene maximale Phasenpotenziale maximale Phasenströme oder für vorgegebene maximale Phasenströme maximale Phasenpotenziale für verschiedene Drehzahlen der elektrischen Maschine ermittelt werden, um die Leistungstreiberschaltung und/oder die elektrische Maschine entsprechend auszulegen.

Es kann alternativ vorgesehen sein, dass zum Regeln des Motorsystems mit der Leistungstreiberschaltung und der mehrphasigen elektronisch kommutierten elektrischen Maschine eine Regelabweichung abhängig zum Beispiel von den Ist-Phasenströmen der elektrischen Maschine bestimmt wird.

So können zum Beispiel bei einer Drehzahlregelung oder einer Drehmomentenregelung oder einer Drehzahlsteuerung oder einer Drehmomentensteuerung des Motorsystems mit der Leistungstreiberschaltung und der mehrphasigen elektronisch kommutierten elektrischen Maschine für vorgegebene Soll-Drehzahl oder Soll-Drehmoment die Ist-Drehzahl oder die Ist-Phasenströme der elektrischen Maschine ermittelt werden, um gegebenenfalls die Regelabweichung zu bestimmen und die Regelung durchzuführen.

Alternativ kann bei einer Diagnose des Motorsystems mit der Leistungstreiberschaltung und der mehrphasigen elektronisch kommutierten elektrischen Maschine für ein vorgegebenes Kommutierungsschema der Leistungstreiberschaltung die Phasenströme der elektrischen Maschine ermittelt werden, wobei abhängig von den Phasenströmen ein Fehler der elektrischen Maschine oder des Leistungstreibers erkannt wird.

Gemäß einer weiteren Ausführungsform können bei einer Diagnose des Motorsystems mit der Leistungstreiberschaltung und der mehrphasigen elektronisch kommutierten elektrischen Maschine für vorgegebenes Kommutierungsschema der Leistungstreiberschaltung die Drehzahl oder die Phasenströme der elektrischen Maschine ermittelt werden, um gegebenenfalls einen Fehler in der Arbeitsweise der elektrischen Maschine oder des Leistungstreibers zu bestimmen.

Gemäß einem weiteren Aspekt ist eine Vorrichtung zum Modellieren bzw. Simulieren eines Motorsystems mit einer Leistungstreiberschaltung mit mehreren Brückeninvertern und einer mehrphasigen elektronisch kommutierten elektrischen Maschine vorgesehen, wobei die Vorrichtung ausgebildet ist, um zur Berechnung von Phasenströmen und Phasenpotenzialen in jedem Zeitschritt folgende Schritte auszuführen:

- Durchführen einer Schaltungssimulation für die Leistungstreiberschaltung unter Vorgabe eines Kommutierungsschemas unter Berücksichtigung einer Sperrspannung von Freilaufdioden, die antiparallel mit Halbleiterschaltern gekoppelt sind, um ein jeweiliges Phasenpotenzial für mindestens einen inaktiv geschalteten Brückeninverter abhängig von einem Zustand der Freilaufdioden mindestens eines inaktiv geschalteten Brückeninverters zu bestimmen;
- Bestimmen mindestens eines Phasenpotenzials von mindestens einem aktiv geschalteten Brückeninverter entsprechend der Ansteuerung mit dem Kommutierungsschema;
- Ermitteln von Phasenströmen basierend auf einem Maschinenmodell der elektronisch kommutierten elektrischen Maschine abhängig von den Phasenpotenzialen.

Weiterhin wird ein Computerprogrammprodukt umfassend Befehle vorgestellt, die bei der Ausführung des Programms durch mindestens eine Datenverarbeitungseinrichtung diese veranlassen, die Schritte des Verfahrens nach einer der vorhergehenden Ausführungsformen auszuführen.

Ferner wird ein, insbesondere maschinenlesbares, Speichermedium umfassend Befehle vorgestellt, die bei der Ausführung durch mindestens eine Datenverarbeitungseinrichtung diese veranlassen, die Schritte des Verfahrens nach einer der vorhergehenden Ausführungsformen auszuführen. Unter einer Datenverarbeitungseinrichtung kann bevorzugt eine Vorrichtung gemäß der vorstehend beschriebenen Ausführungsform verstanden werden.

Kurzbeschreibung der Zeichnungen

Ausführungsformen werden nachfolgend anhand der beigefügten Zeichnungen näher erläutert. Es zeigen:

Figur 1     eine schematische Darstellung eines Motorsystems mit einer Leistungstreiberschaltung und einer elektronisch kommutierten elektrischen Maschine; und

Figur 2     ein Flussdiagramm zur Veranschaulichung eines Verfahrens zur Ermittlung der Phasenpotenziale und Phasenströme zu jedem Zeitschritt im Rahmen einer Simulation des Motorsystems.

Figur 3     ein Flussdiagramm zur Veranschaulichung eines weiteren Verfahrens zur Ermittlung der Phasenpotenziale und Phasenströme zu jedem Zeitschritt im Rahmen einer Simulation des Motorsystems.

Beschreibung von Ausführungsformen

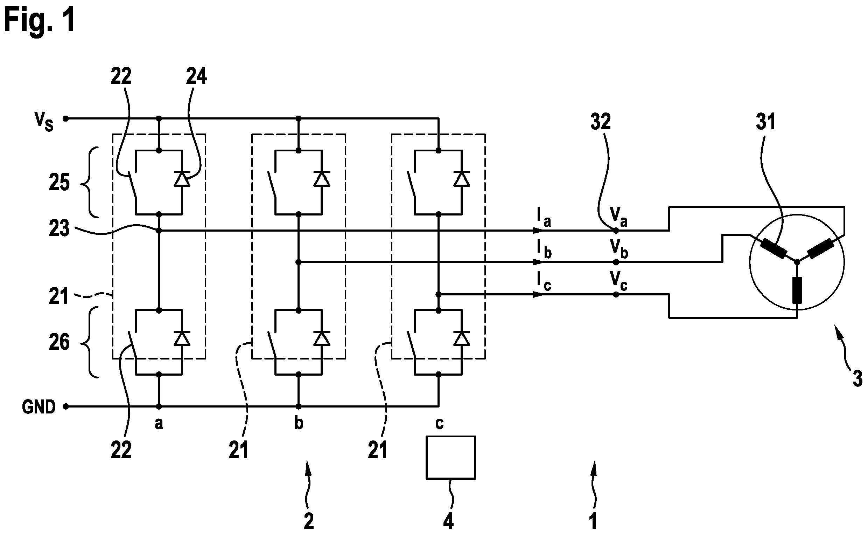

Figur 1 zeigt eine schematische Darstellung eines Motorsystems 1 mit einer Leistungstreiberschaltung 2 und einer durch die Leistungstreiberschaltung 2 angesteuerten elektronisch kommutierten elektrischen Maschine 3. Die elektronisch kommutierte elektrische Maschine ist insbesondere als eine permanentmagneterregte elektrische Maschine ausgebildet, insbesondere als eine Synchronmaschine.

Die elektronisch kommutierte elektrische Maschine 3 ist als dreiphasige Maschine mit drei Phasensträngen 31 in Sternverschaltung ausgebildet. Zum Betreiben der elektrischen Maschine 3 werden Phasenpotenziale (Spannungspotenziale) an Phasenanschlüsse 32 angelegt, die zu einem Stromfluss von Phasenströmen durch die Phasenstränge 31 der elektrischen Maschine 3 führen. Die Phasenpotenziale werden nachfolgend mit $V_a$, $V_b$ und $V_c$ und die Phasenströme mit $I_a$, $I_b$ und $I_c$ bezeichnet.

Die Leistungstreiberschaltung 2 ist als B6-Brückenschaltung ausgebildet und weist drei Brückeninverter 21 auf, jeweils einen Brückeninverter 21 für jeden Phasenanschluss 32. Die Brückeninverter 21 weisen in Reihe geschaltete Halbleiterschalter 22, insbesondere MOSFETs, Thyristoren oder sonstige aktiv schaltbare Halbleiterbauelemente auf. Die Brückeninverter 21 sind jeweils zwischen einem hohen Versorgungspotenzial Vs und einem niedrigen Versorgungspotenzial GND angeschlossen, wobei zwischen dem hohen Versorgungspotenzial VS und einem niedrigen Versorgungspotenzial GND die Versorgungsspannung anliegt. Ein jeweiliger Mittenabgriff 23 zwischen den Halbleiterschaltern 22 ist mit dem jeweiligen Phasenanschluss 32 der elektrischen Maschine 3 verbunden.

Aufgrund des Aufbaus der Halbleiterschalter 22 können diese jeweils eine intrinsische Diode 24 aufweisen, die Freilaufdiode 24 genannt wird. Die betreffende Freilaufdiode 24 wird bei einer Spannung, die größer ist als eine diodenspezifische positive Diodenspannung über dem Pull-up-Zweig 25 des Brückeninverters zwischen dem Mittenabgriff 23 und dem hohen Versorgungspotenzial Vs leitend. Analog wird die betreffende Freilaufdiode 24 bei einer Spannung, die größer ist als eine diodenspezifische positive Diodenspannung über dem Pull-down-Zweig 26 des Brückeninverters 21 zwischen dem niedrigen Versorgungspotenzial GND und dem Mittenabgriff 23 leitend.

Mithilfe einer Steuereinheit 4 werden Steuersignale bereitgestellt, die die Halbleiterschalter 22 ansteuern, sodass diese leiten oder sperren. Durch Anlegen eines pulsweitenmodulierten Steuersignals können auch Spannungen zwischen dem hohen und dem niedrigen Versorgungspotenzial über den Mittenabgriff 23 an den jeweiligen Phasenanschluss angelegt werden.

Beim Entwurf von Motorsystemen mit Leistungstreiberschaltungen und elektrischen Maschinen besteht eine Schwierigkeit darin, das Verhalten im Vorfeld zu simulieren, um eine geeignete Konfiguration des Motorsystems zu ermitteln. Insbesondere ist die Simulation häufig mithilfe von signalflussorientierten Simulationswerkzeugen, wie beispielsweise Simulink, aufwendig, da dort keine physikalischen Blöcke in Form der Dioden, der Halbleiterschalter und der Widerstände simuliert werden können.

Im Folgenden wird ein Verfahren beschrieben, mit dem das Verhalten des Motorsystems in einfacher Weise mithilfe eines signalflussorientierten Simulationswerkzeugs (z.B. Simulink) simuliert werden kann, insbesondere unter Berücksichtigung der Funktion und Wirkung der Freilaufdioden. Entsprechend eines möglichen Kommutierungsschema erfolgt in einer Ausführungsform die Simulation unter der Annahme, dass zeitweise nur für einen der Brückeninverter 21 beide Halbleiterschalter 22 gleichzeitig abgeschaltet bzw. sperrend sein können. Die beiden anderen Brückeninverter 21 sind dabei aktiv, d. h. einer der beiden Halbleiterschalter 22 ist jeweils leitend geschaltet, während der entsprechend andere der Halbleiterschalter 22 des entsprechenden Brückeninverters 21 sperrt. Nachfolgend wird angenommen, dass der Phasenstrang 31 zur Phase a die beiden sperrenden Halbleiterschalter 22 aufweist.

Grundsätzlich gilt für die Modellierung der elektrischen Maschinen folgendes Gleichungssystem:

$$\frac{d}{dt}\left(\begin{bmatrix} Ia \\ Ib \end{bmatrix}\right) = \frac{1}{LaLb + LbLc + LcLa} \cdot \begin{bmatrix} Lb + Lc & Lb \\ -Lc & La \end{bmatrix}$$
$$\cdot \left(\begin{bmatrix} Va - Vb \\ Vb - Vc \end{bmatrix} - R\begin{bmatrix} Ia - Ib \\ Ia + 2 \cdot Ib \end{bmatrix} - \begin{bmatrix} ea - eb \\ eb - ec \end{bmatrix}\right)$$

$$Ia + Ib + Ic = 0$$

wobei R dem Phasenwiderstand, $L_a$, $L_b$, $L_c$ den Induktivitäten der Phasenstränge 31 und $e_a$, $e_b$ und $e_c$ der Back-EMF der Phasen entsprechen.

Die Simulation muss basierend auf einem Zustandsautomaten erfolgen, der für jeden Brückeninverter 21 mit beiden Halbleiterschaltern 22 gleichzeitig abgeschaltet bzw. sperrend drei Zustände annehmen kann, wobei die Zustände hinsichtlich des Schaltzustands der Freilaufdioden 24 definiert sind. Die Zustände Za für die Phase a umfassen das Sperren beider Freilaufdioden 24, das Leiten der Pull-down-Freilaufdiode 24 im Pull-down-Zweig und das Leiten der Pull-up-Freilaufdiode im Pull-up-Zweig in dem Brückeninverter 21 der Phase a , während die jeweils andere Freilaufdiode 24 sperrt. Das Phasenpotenzial Va hängt dann von dem Phasenstrom $I_a$, der Sperrspannung $V_{sperr,ld}$ der Pull-down-Freilaufdiode und der Sperrspannung $V_{sperr,ud}$ der Pull-up-Freilaufdiode zur Stromleitung durch den Pull-down-Zweig bzw. den Pull-up-Zweig, dem Potenzial

$$\frac{f(Vb, VC, Ia, Ib, Ic, R, La, Lb, Lc, ea, eb, ec)}{g(La, Lb, Lc)}$$

entsprechend der Gleichung

$$\frac{d}{dt}Ia = f(Vb, Vc, Ia, Ib, Ic, R, La, Lb, Lc, ea, eb, ec) + g(La, Lb, Lc) \cdot Va,$$

die einer Generalisierung des obigen Maschinenmodells entspricht, und dem aktuellen diskreten Zustand $Z_a$ der Freilaufdioden in dem betrachteten Brückeninverter der Phase a ab.

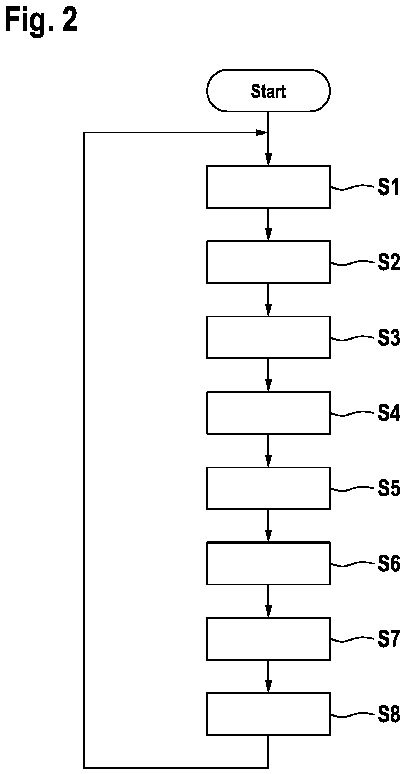

Im Folgenden wird das Verfahren zur Modellierung des Motorsystems 1 anhand des Flussdiagramms der Figur 2 beschrieben.

In Schritt S1 werden zunächst aktuelle Parametergrößen und die Ausgangsgrößen der Modellierung der elektrischen Maschine aus dem vorangegangenen Zeitschritt bereitgestellt.

Die Parametergrößen entsprechen dem Phasenwiderstand R, den Induktivitäten der Phasenstränge $L_a$, Lb, $L_c$ der Back-EMF $e_a$ $e_b$ und $e_c$, deren Werte am Anfang einer Simulation vom Anwender vorgegeben und im Lauf der Simulation vom Maschinenmodell in an sich bekannter Weise aktualisiert werden, falls diese zum Beispiel von Phasenströmen, vom Lagewinkel der Maschine, von der Rotordrehzahl und/oder von Temperaturen abhängen.

Weiterhin werden die Phasenströme $I_a$, $I_b$ und $I_c$ aus dem vorangegangenen Zeitschritt bereitgestellt.

Weiterhin werden aktuelle Parametergrößen und Ausgangsgrößen der Modellierung der Leistungstreiberschaltung in Schritt S2 bereitgestellt. Die Parametergrößen umfassen den Diodenspannungsabfall $U_D$ einer Freilaufdiode 24, das hohe Versorgungspotenzial Vs, das niedrige Versorgungspotenzial GND, der Ansteuerungszustand der Halbleiterschalter 22 in den Brückeninvertern 21 sowie der Systemzustand $Z_a$ der Phase a.

In Schritt S3 wird zunächst die Leistungstreiberschaltung simuliert, wobei die Phasenpotenziale $V_b$, $V_c$ der angesteuerten Phasen b und c auf das hohe Versorgungspotenzial Vs oder das niedrige Versorgungspotenzial GND je nach Kommutierungsschema gesetzt werden, je nachdem welcher der Halbleiterschalter leitend und welcher sperrend ist.

In Schritt S4 werden die Sperrspannung $V_{sperr,ld}$ der Pull-down-Freilaufdiode 24 und die Sperrspannung $V_{sperr,ud}$ der Pull-up-Freilaufdiode 24 ermittelt, wobei zur Stromleitung durch die Pull-down-Freilaufdiode $V_{sperr,ld}$ = GND - $U_D$ und zur Stromleitung durch die Pull-up-Freilaufdiode $V_{sperr,ud}$ = $V_S$ + $U_D$ ermittelt werden. Die Sperrspannungen $V_{sperr,ud}$ $V_{sperr,ld}$ können nun zur Zustandsbestimmung des betreffenden Brückeninverters 21 dienen, indem das mithilfe des Maschinenmodells berechnete Phasenpotenzial für den Fall, dass beide Freilaufdioden 24 sperren, mit den Sperrspannungen verglichen wird. Auf diese Weise kann eine Stromleitung durch die betreffende Freilaufdiode 24 festgestellt werden.

Anschließend wird in Schritt S5 der Zustand Za abhängig vom Phasenpotenzial

$$Va = \frac{-f(Vb, Vc, Ia, Ib, Ic, R, La, Lb, Lc, ea, eb, ec)}{g(La, Lb, Lc)}$$

für den Fall, dass beide Freilaufdioden sperren (entsprechend der obigen Modellgleichung), vom Phasenstrom Ia, von den Sperrspannungen $V_{sperr,ud}$ , $V_{sperr,ld}$ und vom bisherigen Zustand Za ermittelt, indem festgestellt wird, welche der Freilaufdioden 24 leitet und welche nicht. Für die Aktualisierung des Zustandes Za kann zum Beispiel ein an sich bekannter Zustandsautomat verwendet werden, wie in der Veröffentlichung M. Otter et al., "Hybrid Modeling in Modelica based on the Synchronous Data Flow Principle" CACSD'99, August 22.-26., Hawaii, USA, 1999. 1, https://people.inf.ethz.ch/fcellier/Lect/MMPS/Refs/hybrid99.pdf, Abschnitt 4.2 offenbart.

In Schritt S6 wird das Phasenpotenzial abhängig von dem aktualisierten Zustand Za bestimmt. Das Phasenpotenzial entspricht Va = GND - $U_D$, wenn die Pull-down-Freilaufdiode 24 leitet, Va =Vs+ $U_D$, wenn die Pull-up-Freilaufdiode leitet, oder

$$Va = -\frac{f(Vb, Vc, Ia, Ib, Ic, R, La, Lb, Lc, ea, eb, ec)}{g(La, Lb, Lc)}$$

(entsprechend der obigen Modellgleichung ermittelt), wenn beide Freilaufdioden sperren.

Im Schritt S7 werden die Phasenpotenziale $V_a$, $V_b$ und $V_c$ für die Modellierung der elektrischen Maschine 3 an ein Maschinenmodell übertragen.

Weiterhin werden in Schritt S8 die Phasenpotenziale $V_a$, $V_b$ und $V_c$ in Verbindung mit der Rotordrehzahl $\omega$ bzw. der Rotorposition p der elektrischen Maschine zur Lösung des Maschinenmodells der elektrischen Maschine 3 mithilfe des Gleichungssystems verwendet, um die Phasenströme $I_a$, $I_b$ und $I_c$ zu berechnen:

$$\frac{d}{dt}\left(\begin{bmatrix} Ia \\ Ib \end{bmatrix}\right) = \frac{1}{LaLb + LbLc + LcLa} \cdot \begin{bmatrix} Lb + Lc & Lb \\ -Lc & La \end{bmatrix}$$
$$\cdot \left(\begin{bmatrix} Va - Vb \\ Vb - Vc \end{bmatrix} - R \begin{bmatrix} Ia - Ib \\ Ia + 2 \cdot Ib \end{bmatrix} - \begin{bmatrix} ea - eb \\ eb - ec \end{bmatrix}\right)$$

$$Ia + Ib + Ic = 0$$

Als alternatives Gleichungssystem kann zur Berechnung des a *priori* unbekannten Phasenpotenzials $V_a$ auf folgendes Gleichungssystem verwendet werden, das jedoch vom Sternpunktpotenzial $V_{wye}$ abhängt und sich entsprechend umschreiben lässt zu

$$\frac{d}{dt} \cdot \left(\begin{bmatrix} La \cdot Ia \\ Lb \cdot Ib \\ Lc \cdot Ic \end{bmatrix}\right) = \begin{bmatrix} Va - Vwye \\ Vb - Vwye \\ Vc - Vwye \end{bmatrix} - R \cdot \begin{bmatrix} Ia \\ Ib \\ Ic \end{bmatrix} - \begin{bmatrix} ea \\ eb \\ ec \end{bmatrix}$$

mit

$$\frac{d}{dt} \cdot ([LaIa]) = -Vwye - RIa - ea + Va$$

Anstelle der Vorgehensweise des Schritts S5 können entsprechend der obigen Modellgleichung drei möglichen Werte $V_{a,1}$, $V_{a,2}$, $V_{a,3}$ für das a priori unbekannte Phasenpotenzial $V_a$ ermittelt werden:

$V_{a,1}$ =GND-$U_D$ wenn die untere Freilaufdiode leitet,
$V_{a,2}$ =$V_S$ + $U_D$ wenn die obere Freilaufdiode leitet,
$Va,3 = -\dfrac{f(Vb,Vc,Ia,Ib,Ic,R,La,Lb,Lc,ea,eb,ec)}{g(La,Lb,Lc)}$ , wenn beide Freilaufdioden sperren.

Anschließend wird für jeden möglichen Wert $V_{a,1}$, $V_{a,2}$, $V_{a,3}$ des Phasenpotenzials $V_a$ einen möglichen Wert $V_{wye,1}$, $V_{wye,2}$, $V_{wye,3}$ für das Sternpunktpotenzial $V_{wye}$ ermittelt, wobei $V_{wye}$ unter anderem von den Phasenpotenzialen $V_a$ (jeweilig), $V_b$, $V_c$, dem Phasenwiderstand R, den Phasenströmen $I_a$, $I_b$, $I_c$ und den Back-EMF $e_a$, $e_b$, $e_c$ der Phasenstränge 31 abhängt.

Anschließend wird für jeden möglichen Wert $V_{wye,1}$, $V_{wye,2}$, $V_{wye,3}$ des Sternpunktpotenzials $V_{wye}$ ein möglicher Zustand $Z_{a,1}$, $Z_{a,2}$, $Z_{a,3}$ für den Zustand Za abhängig von der Spannung *Vwye + RIa + ea* für den Fall, dass beide Freilaufdioden sperren (entsprechend der obigen Modellgleichung), vom Phasenstrom Ia, von den Sperrspannungen $V_{sperr,ud}$ , $V_{sperr,ld}$ und vom bisherigen Zustand Za ermittelt, indem festgestellt wird, welche der Freilaufdioden 24 leitet und welche nicht. Für die Aktualisierung des Zustandes Za kann zum Beispiel ein an sich bekannter Zustandsautomat verwendet werden, wie in der Veröffentlichung M. Otter et al., "Hybrid Modeling in Modelica based on the Synchronous Data Flow Principle" CACSD'99, August 22.-26., Hawaii, USA, 1999. 1, https://people.inf.ethz.ch/fcellier/Lect/MMPS/Refs/hybrid99.pdf, Abschnitt 4.2 offenbart.

Weiterhin wird durch eine Plausibilitätsprüfung der aktuelle Zustand Za und das zugehörige Phasenpotenzial Va bestimmt, während die beiden übrigen für die nicht vorliegenden Zustände Za bestimmten Phasenpotenziale Va eliminiert werden.

Alternativ kann das Verfahren auch mit einem Kommutierungsschema ausgeführt werden, das vorsieht, dass in einem Zeitschritt zwei der Brückeninverter 21 deaktiviert sind, d. h. beide Halbleiterschalter 22 des jeweiligen Brückeninverters sperren.

Das Maschinenmodell kann dann formuliert werden als

$$\frac{d}{dt}Ia = f_a(Vc, Ia, Ib, Ic, R, La, Lb, Lc, ea, eb, ec) + g_a(La, Lb, Lc).Va +$$
$$h_a(La, Lb, Lc).Vb \ (4)$$

$$\frac{d}{dt}Ib = f_b(Vc, Ia, Ib, Ic, R, La, Lb, Lc, ea, eb, ec) + g_b(La, Lb, Lc).Va +$$
$$h_b(La, Lb, Lc).Vb \ (5)$$

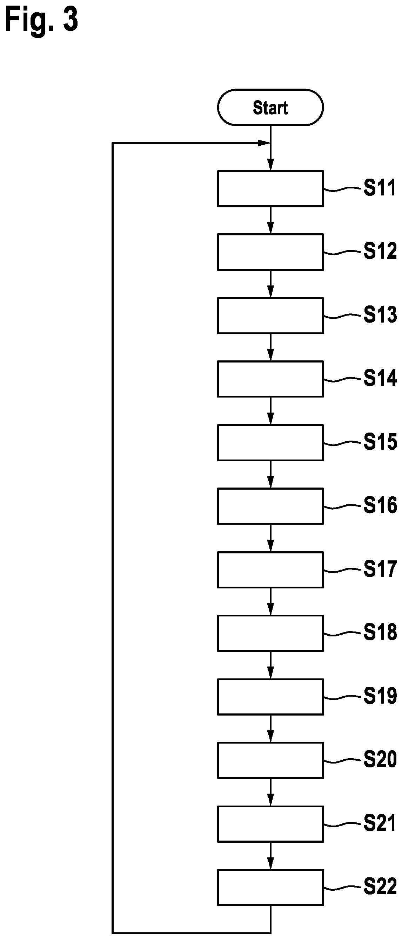

Im Folgenden wird das Verfahren zur Modellierung eines solchen Motorsystems 1 mit zwei deaktivierten Brückeninvertern (Phasen a, b) anhand des Flussdiagramms der Figur 3 beschrieben.

In Schritt S11 werden zunächst aktuelle Parametergrößen und die Ausgangsgrößen der Modellierung der elektrischen Maschine aus dem vorangegangenen Zeitschritt bereitgestellt.

Die Parametergrößen entsprechen dem Phasenwiderstand R, den Induktivitäten der Phasenstränge $L_a$, $L_b$, $L_c$ und der Back-EMF $e_a$, $e_b$, und $e_c$, deren Werte am Anfang einer Simulation vom Anwender spezifiziert und im Lauf der Simulation vom Maschinenmodell aktualisiert werden, falls diese zum Beispiel von Phasenströmen, vom Lagewinkel der Maschine, von der Rotordrehzahl und/oder von Temperaturen abhängen.

Weiterhin werden die Phasenströme $I_a$, $I_b$ und $I_c$ aus dem vorangegangenen Zeitschritt bereitgestellt.

Weiterhin werden aktuelle Parametergrößen und Ausgangsgrößen der Modellierung der Leistungstreiberschaltung in Schritt S12 bereitgestellt. Die Parametergrößen umfassen den Diodenspannungsabfall $U_D$ aller Freilaufdioden, das hohe Versorgungspotenzial Vs, das niedrige Versorgungspotenzial GND, der Ansteuerungszustand der Halbleiterschalter 22 in den Brückeninvertern 21 sowie der Zustand $Z_a$, $Z_b$ der Phasen a, b.

In Schritt S13 wird zunächst die Leistungstreiberschaltung 2 simuliert, wobei das Phasenpotenzial $V_c$ der angesteuerten Phase c auf das hohe Versorgungspotenzial Vs oder das niedrige Versorgungspotenzial GND je nach Kommutierungsschema gesetzt wird, je nachdem welcher der Halbleiterschalter 22 leitend und welcher sperrend ist.

In Schritt S14 werden das Phasenpotenzial $V_{b,Ia>0}$ und das Phasenpotential $V_{b,Ia<0}$ bestimmt. Dafür können jeweils die vorigen Schritte S4-S6 mit angepassten Indizes verwendet werden. Bei der Berechnung von $V_{b,Ia>0}$ ist Va = GND - $U_D$ zu verwenden (der Wert von Va bei Ia>0) bzw. bei der Berechnung von $V_{b,Ia<0}$ ist Va = $V_S$+ $U_D$ zu verwenden (der Wert von Va bei Ia<0).

In Schritt S15 werden die Sperrspannungen $V_{sperr,ld}$ bzw. $V_{sperr,ud}$ ermittelt, die zum Sperren der Pull-down-Freilaufdiode 24 bzw. zum Sperren der Pull-up-Freilaufdiode 24 des Brückeninverters der Phase a führen, wobei zur Stromleitung durch die Pull-down-Freilaufdiode

$$V_{sperr,ld} = k_a(GND - U_D, V_{b,Ia>0}, L_a, L_b, L_c)$$

und zur Stromleitung durch die Pull-up-Freilaufdiode

$$V_{sperr,ud} = p_a(Vs+U_D, V_{b,Ia<0}, L_a, L_b, L_c)$$

ermittelt werden.

Anschließend wird in Schritt S16 der Zustand Za aktualisiert abhängig von der Spannung

$g_a(La, Lb, Lc) \bullet Va + h_a(La, Lb, Lc) \bullet Vb = -f_a(Vc, Ia, Ib, Ic, R, La, Lb, Lc, ea, eb, ec)$ im Fall, dass beide Freilaufdioden 24 des Brückeninverters 21 der Phase a sperren (entsprechend der obigen Modellgleichung (4) mit $\frac{d}{dt}Ia = 0$ ), vom Phasenstrom Ia, von den Sperrspannungen $V_{sperr,ud}$, $V_{sperr,ld}$ des Schrittes S15 und vom bisherigen Zustand Za ermittelt, indem festgestellt wird, welche der Freilaufdioden 24 des Brückeninverters 21 der Phase a leitet und welche nicht. Für die Aktualisierung des Zustandes Za kann zum Beispiel ein entsprechender Zustandsautomat verwendet werden.

In Schritt S17 werden die Phasenpotenziale $V_{a,Ib>0}$ und $V_{a,Ib<0}$ bestimmt. Dafür können jeweils die vorigen Schritte S4-S6 verwendet werden. Bei der Berechnung von $V_{a,Ib>0}$ ist Vb = GND - $U_D$ zu verwenden (der Wert von Vb bei Ib>0) bzw. bei der Berechnung von $V_{a,Ib<0}$ ist Vb = Vs+ $U_D$ zu verwenden (der Wert von Vb bei Ib<0).

In Schritt S18 werden die Sperrspannungen $V_{sperr,ld}$ bzw. $V_{sperr,ud}$ ermittelt, die zum Sperren der Pull-down-Freilaufdiode 24 bzw. zum Sperren der Pull-up-Freilaufdiode 24 des Brückeninverters der Phase b führen, wobei zur Stromleitung durch die Pull-down-Freilaufdiode $V_{sperr,ld} = k_b(GND - U_D, V_{a,Ib>0}, L_a, L_b, L_c)$ und zur Stromleitung durch die Pull-up-Freilaufdiode $V_{sperr,ud} = p_b(VS+U_D, V_{a,Ib<0}, L_a, L_b, L_c)$ ermittelt werden.

Anschließend wird in Schritt S19 der Zustand Zb aktualisiert abhängig von der Spannung

$$g_b(La, Lb, Lc) \cdot Va + h_b(La, Lb, Lc) \cdot Vb = -f_b(Vc, Ia, Ib, Ic, R, La, Lb, Lc, ea, eb, ec)$$

für den Fall, dass beide Freilaufdioden 24 des Brückeninverters 21 der Phase b sperren (entsprechend der obigen Modellgleichung (5) mit $\frac{d}{dt}Ib = 0$ ), vom Phasenstrom Ib, von den Sperrspannungen $V_{sperr,ud}$, $V_{sperr,ld}$, des Schritts S18 und vom bisherigen Zustand Zb ermittelt, indem festgestellt wird, welche der Freilaufdioden 24 des Brückeninverters 21 der Phase b leiten und welche nicht. Für die Aktualisierung des Zustandes Zb kann zum Beispiel ein entsprechender Zustandsautomat verwendet werden.

In Schritt S20 werden die Phasenpotenziale Va der Phase a und Vb der Phase b abhängig von den Zuständen Za und Zb des betreffenden Brückeninverters 21 bestimmt. Die Phasenpotenziale entsprechen:

1. Va und Vb als Lösung der obigen Modellgleichungen (4) & (5) mit $\frac{d}{dt}Ia = 0$ und $\frac{d}{dt}Ib = 0$ , wenn alle Freilaufdioden 24 der Brückeninverter 21 der Phase a und b sperren,

2. Va = GND - $U_D$, wenn beide Freilaufdioden 24 des Brückeninverters 21 der Phase b sperren und wenn die Pull-down-Freilaufdiode 24 des Brückeninverters 21 der Phase a leitet, und

$$Va = Vs+ U_D \, ,$$

wenn beide Freilaufdioden 24 des Brückeninverters 21 der Phase b sperren und wenn die Pull-up -Freilaufdiode 24 des Brückeninverters der Phase a leitet, und

$$Vb = -\frac{f_b(Vc, Ia, Ib, Ic, R, La, Lb, Lc, ea, eb, ec) + g_b(La, Lb, Lc).Va}{h_b(La, Lb, Lc)}$$

(entsprechend der obigen Modellgleichung (5) mit $\frac{d}{dt}Ib = 0$ .

3.

$$Vb = GND - U_D,$$

wenn beide Freilaufdioden 24 des Brückeninverters 21 der Phase a sperren und wenn die Pull-down-Freilaufdiode 24 des Brückeninverters der Phase b leitet,

$$Vb = Vs + U_D,$$

wenn beide Freilaufdioden 24 des Brückeninverters 21 der Phase a sperren und wenn die Pull-up-Freilaufdiode 24 des Brückeninverters der Phase b leitet und

$$Va = -\frac{f_a(Vc, Ia, Ib, Ic, R, La, Lb, Lc, ea, eb, ec) + h_a(La, Lb, Lc).Vb}{g_a(La, Lb, Lc)}$$

(entsprechend der obigen Modellgleichung (4) mit $\frac{d}{dt}Ia = 0$ ).

$$Va = GND - U_D,$$

wenn die Pull-down-Freilaufdiode 24 des Brückeninverters der Phase a leitet

$$Va = Vs + U_D,$$

wenn die Pull-up-Freilaufdiode 24 des Brückeninverters der Phase a leitet,

$$Vb = GND - U_D,$$

wenn die Pull-down-Freilaufdiode 24v des Brückeninverters der Phase b leitet, $Vb = Vs + U_D$,
wenn die Pull-up-Freilaufdiode 24 des Brückeninverters der Phase b leitet.

Im Schritt S21 werden die Phasenpotenziale $V_a$, $V_b$ und $V_c$ für die Modellierung der elektrischen Maschine 3 an ein Maschinenmodell übertragen.

Weiterhin werden in Schritt S22 die Phasenpotenziale $V_a$, $V_b$ und $V_c$ in Verbindung mit der Rotordrehzahl $\omega$ bzw. der Rotorposition p der elektrischen Maschine zur Lösung des Maschinenmodells der elektrischen Maschine mithilfe des Gleichungssystems verwendet, um die Phasenströme $I_a$, $I_b$ und $I_c$ zu berechnen:

$$\frac{d}{dt}\left(\begin{bmatrix} Ia \\ Ib \end{bmatrix}\right) = \frac{1}{LaLb + LbLc + LcLa} \cdot \begin{bmatrix} Lb + Lc & Lb \\ -Lc & La \end{bmatrix}$$
$$\cdot \left(\begin{bmatrix} Va - Vb \\ Vb - Vc \end{bmatrix} - R\begin{bmatrix} Ia - Ib \\ Ia + 2 \cdot Ib \end{bmatrix} - \begin{bmatrix} ea - eb \\ eb - ec \end{bmatrix}\right)$$

$$Ia + Ib + Ic = 0$$

Die berechneten Phasenströme $I_a$, $I_b$ und $I_c$ können nun zur Auslegung des Motorsystems mit der Leistungstreiberschaltung 2 und der mehrphasigen elektronisch kommutierten elektrischen Maschine 3 verwendet werden, um für vorgegebene maximale Phasenpotenziale $V_a$, $V_b$, $V_c$ maximale Phasenströme $I_a$, $I_b$, $I_c$ oder für vorgegebene maximale Phasenströme Ia, Ib, Ic maximale Phasenpotenziale Va, Vb, Vc für verschiedene Drehzahlen der elektrischen Maschine 3 zu ermitteln, um die Leistungstreiberschaltung 2 und/oder die elektrische Maschine 3 entsprechend auszulegen.

Es kann auch vorgesehen sein, dass zum Regeln des Motorsystems mit der Leistungstreiberschaltung 2 und der mehrphasigen elektronisch kommutierten elektrischen Maschine 3 eine Regelabweichung bezüglich zum Beispiel der Ist-Phasenströme Ia, Ib, Ic der elektrischen Maschine bestimmt wird. Alternativ kann das Motorsystem auch abhängig von den Ist-Phasenströmen Ia, Ib, Ic gesteuert betrieben werden.

Weiterhin können bei einer Diagnose des Motorsystems 1 mit der Leistungstreiberschaltung 2 und der mehrphasigen elektronisch kommutierten elektrischen Maschine 3 für ein vorgegebenes Kommutierungsschema der Leistungstreiberschaltung 2 die Phasenströme der elektrischen Maschine 3 ermittelt werden, wobei abhängig von den Phasenströmen Ia, Ib, Ic ein Fehler der elektrischen Maschine 3 oder der Leistungstreiberschaltung 2 erkannt wird. Zum Beispiel wird ein Halbleiterschalter 22 stets angesteuert, um einen Kurzschluss in einem Halbleiterschalter einer Phase des Brückeninverters zu simulieren. Dabei soll der Kurzschluss aus dem Profil der berechneten Phasenströme identifiziert werden.

**Patentansprüche**

1. Computer-implementiertes Verfahren zum Modellieren, Simulieren, Regeln oder Diagnostizieren eines Motorsystems mit einer Leistungstreiberschaltung (2) mit mehreren Brückeninvertern (21) und einer mehrphasigen elektronisch kommutierten elektrischen Maschine (3), wobei zur modellbasierten Berechnung von Phasenströmen ($I_a$, $I_b$, $I_c$) und Phasenpotenzialen ($V_a$, $V_b$, $V_c$) in jedem Zeitschritt folgende Schritte ausgeführt werden:

   - Durchführen einer Schaltungssimulation für die Leistungstreiberschaltung (2) unter Vorgabe eines Kommutierungsschemas unter Berücksichtigung einer Sperrspannung von Freilaufdioden (24), die antiparallel mit Halbleiterschaltern (22) gekoppelt sind, um ein jeweiliges Phasenpotenzial für mindestens einen inaktiv geschalteten Brückeninverter (21) abhängig von einem Zustand der Freilaufdioden (24) mindestens eines inaktiv geschalteten Brückeninverters (21) zu bestimmen;
   - Bestimmen mindestens eines Phasenpotenzials (Va, Vb, Vc) von mindestens einem aktiv geschalteten Brückeninverter (21) entsprechend der Ansteuerung mit dem Kommutierungsschema;
   - Ermitteln von Phasenströmen (Ia, Ib, Ic) basierend auf einem Maschinenmodell der elektronisch kommutierten elektrischen Maschine abhängig von den Phasenpotenzialen ($V_a$, $V_b$, $V_c$).

2. Verfahren nach Anspruch 1, wobei zum Bestimmen des Phasenpotenzials des mindestens einen inaktiv geschalteten Brückeninverters (21) ein resultierendes Phasenpotenzial ermittelt wird, das entsprechend dem Zustand der Freilaufdioden (24) auf ein sich von Sperrspannungen der Freilaufdioden (24) ergebendes Potenzial begrenzt wird.

3. Verfahren nach Anspruch 2, wobei das Phasenpotenzial des mindestens einen inaktiv geschalteten Brückeninverters (21) abhängig von einem Sternpunktpotenzial bestimmt wird.

4. Verfahren nach Anspruch 2 oder 3, wobei bei mehreren inaktiv geschalteten Brückeninvertern (21) die entsprechende Sperrspannung eines der mehreren inaktiv geschalteten Brückeninverter (21) durch eine Stromleitung durch eine der Freilaufdioden (24) eines weiteren der mehreren inaktiv geschalteten Brückeninverter (21) bestimmt wird.

5. Verfahren nach einem der Ansprüche 1-4, wobei das Maschinenmodell ein Sternpunktpotenzial berücksichtigt, wobei entsprechend der Zustände mögliche Phasenpotenziale ($V_a$, $V_b$, $V_c$) für den mindestens einen inaktiv geschalteten Brückeninverter (21) ermittelt werden und aus den möglichen Phasenpotenzialen ($V_a$, $V_b$, $V_c$) die möglichen resultierenden Zustände bestimmt werden, wobei mithilfe einer Plausibilitätsprüfung der aktuelle Zustand und das zugehörige Phasenpotenziale ($V_a$, $V_b$, $V_c$) des mindestens einen inaktiv geschalteten Brückeninverters (21) aus den möglichen Phasenpotenzialen ($V_a$, $V_b$, $V_c$) und den möglichen resultierenden Zuständen ausgewählt wird.

6. Verfahren nach einem der Ansprüche 1 bis 5, wobei das Kommutierungsschema zumindest zeitweise ein Inaktivschalten eines oder mehrerer den einzelnen Phasen zugeordneten Brückeninverter (21) vorsieht.

7. Verfahren nach einem der Ansprüche 1 bis 6, wobei bei der Auslegung des Motorsystems mit der Leistungstreiberschaltung (2) und der mehrphasigen elektronisch kommutierten elektrischen Maschine (3) für vorgegebene maximale Phasenpotenziale ($V_a$, $V_b$, $V_c$) maximale Phasenströme ($I_a$, $I_b$, $I_c$) oder für vorgegebene maximale Phasenströme ($I_a$, $I_b$, $I_c$) maximale Phasenpotenziale ($V_a$, $V_b$, $V_c$) für verschiedene Drehzahlen der elektrischen Maschine (3) ermittelt werden, um die Leistungstreiberschaltung (2) und/oder die elektrische Maschine (3) entsprechend auszulegen.

8. Verfahren nach einem der Ansprüche 1 bis 6, wobei zum Regeln des Motorsystems mit der Leistungstreiberschaltung (2) und der mehrphasigen elektronisch kommutierten elektrischen Maschine (3) eine Regelabweichung insbesondere bezüglich der Ist-Phasenströme ($I_a$, $I_b$, $I_c$) der elektrischen Maschine bestimmt wird.

9. Verfahren nach einem der Ansprüche 1 bis 6, wobei bei einer Diagnose des Motorsystems mit der Leistungstreiberschaltung und der mehrphasigen elektronisch kommutierten elektrischen Maschine für ein vorgegebenes Kommutierungsschema der Leistungstreiberschaltung die Phasenströme der elektrischen Maschine ermittelt werden, wobei abhängig von den Phasenströmen ein Fehler der elektrischen Maschine oder des Leistungstreibers erkannt wird.

10. Vorrichtung zum Modellieren, Simulieren, Regeln oder Diagnostizieren eines Motorsystems mit einer Leistungstreiberschaltung (2) mit mehreren Brückeninvertern (21) und einer mehrphasigen elektronisch kommutierten elektrischen Maschine (3), wobei die Vorrichtung ausgebildet ist, um zur Berechnung von Phasenströmen ($I_a$, $I_b$, $I_c$) und Phasenpotenzialen ($V_a$, $V_b$, $V_c$) in jedem Zeitschritt folgende Schritte auszuführen:

   - Durchführen einer Schaltungssimulation für die Leistungstreiberschaltung (2) unter Vorgabe eines Kommutierungsschemas unter Berücksichtigung einer Sperrspannung von Freilaufdioden (24), die antiparallel mit Halbleiterschaltern (22) gekoppelt sind, um ein jeweiliges Phasenpotenzial für mindestens einen inaktiv geschalteten Brückeninverter (21) abhängig von einem Zustand der Freilaufdioden (24) mindestens eines inaktiv geschalteten Brückeninverters (21) zu bestimmen;
   - Bestimmen mindestens eines Phasenpotenzials (Va, Vb, Vc) von mindestens einem aktiv geschalteten Brückeninverter (21) entsprechend der Ansteuerung mit dem Kommutierungsschema;
   - Ermitteln von Phasenströmen (Ia, Ib, Ic) basierend auf einem Maschinenmodell der elektronisch kommutierten elektrischen Maschine abhängig von den Phasenpotenzialen ($V_a$, $V_b$, $V_c$).

11. Computerprogrammprodukt umfassend Befehle, die bei der Ausführung des Programms durch mindestens eine Datenverarbeitungseinrichtung, insbesondere der Vorrichtung nach Anspruch 10, diese veranlassen, die Schritte des Verfahrens nach einem der Ansprüche 1 bis 9 auszuführen.

12. Maschinenlesbares Speichermedium, umfassend Befehle, die bei der Ausführung durch mindestens eine Datenverarbeitungseinrichtung, insbesondere der Vorrichtung nach Anspruch 10, diese veranlassen, die Schritte des Verfahrens nach einem der Ansprüche 1 bis 9 auszuführen.

**Fig. 1**

EP 4 075 318 A1

# Fig. 2

# Fig. 3

```
                    ┌──────────┐
                    │   Start   │
                    └────┬─────┘
          ┌──────────────┤
          │              ▼
          │         ┌─────────┐
          │         │         │────── S11
          │         └────┬────┘
          │              ▼
          │         ┌─────────┐
          │         │         │────── S12
          │         └────┬────┘
          │              ▼
          │         ┌─────────┐
          │         │         │────── S13
          │         └────┬────┘
          │              ▼
          │         ┌─────────┐
          │         │         │────── S14
          │         └────┬────┘
          │              ▼
          │         ┌─────────┐
          │         │         │────── S15
          │         └────┬────┘
          │              ▼
          │         ┌─────────┐
          │         │         │────── S16
          │         └────┬────┘
          │              ▼
          │         ┌─────────┐
          │         │         │────── S17
          │         └────┬────┘
          │              ▼
          │         ┌─────────┐
          │         │         │────── S18
          │         └────┬────┘
          │              ▼
          │         ┌─────────┐
          │         │         │────── S19
          │         └────┬────┘
          │              ▼
          │         ┌─────────┐
          │         │         │────── S20
          │         └────┬────┘
          │              ▼
          │         ┌─────────┐
          │         │         │────── S21
          │         └────┬────┘
          │              ▼
          │         ┌─────────┐
          │         │         │────── S22
          │         └────┬────┘
          └──────────────┘
```

Europäisches
Patentamt

European
Patent Office

Office européen
des brevets

**EUROPÄISCHER RECHERCHENBERICHT**

Nummer der Anmeldung

**EP 22 16 0215**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Diamond Matlab Tutorials: "Simulation of IGBT Based Three Phase Full Bridge Inverter using MATLAB Simulink-MATLAB Tutorial", , 1. Mai 2017 (2017-05-01), XP055949858, Gefunden im Internet: URL:https://www.youtube.com/watch?v=X7hePknREfA [gefunden am 2022-08-05] | 1-12 | INV. G06F30/20 G06F30/367 H02P6/34 ADD. G06F111/10 G06F119/06 |
| Y | * 02:07f * * 03:34f * * 07:07f * * 07:35f * * 07:45f * * 08:55f * * das ganze Dokument * ----- | 1 | |
| Y | Anonymous: "Piecewise or exponential diode — MATLAB", , 1. Januar 2008 (2008-01-01), XP055949857, Gefunden im Internet: URL:https://www.mathworks.com/help/physmod/sps/ref/diode.html [gefunden am 2022-08-08] * das ganze Dokument * ----- | 1 | RECHERCHIERTE SACHGEBIETE (IPC) G06F H02P |
| X | EP 3 316 477 A1 (DSPACE GMBH [DE]) 2. Mai 2018 (2018-05-02) * Absätze [0006], [0022], [0025], [0031]; Anspruch 1 * * das ganze Dokument * ----- | 1 | |

Der vorliegende Recherchenbericht wurde für alle Patentansprüche erstellt

| Recherchenort | Abschlußdatum der Recherche | Prüfer |
|---|---|---|
| **München** | **8. August 2022** | **Dapp, Wolfgang** |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                                 EP 22 16 0215

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-08-2022

| Im Recherchenbericht angeführtes Patentdokument | Datum der Veröffentlichung | Mitglied(er) der Patentfamilie | Datum der Veröffentlichung |
|---|---|---|---|
| EP 3316477 A1 | 02-05-2018 | CN 108008640 A<br>EP 3316477 A1<br>JP 2018074902 A<br>US 2018123497 A1 | 08-05-2018<br>02-05-2018<br>10-05-2018<br>03-05-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. OTTER et al.** Hybrid Modeling in Modelica based on the Synchronous Data Flow Principle. *CACSD'99,* 22. August 1999, 1, https://people.inf.ethz.ch/fcellier/Lect/MMPS/Refs/hybrid99.pdf